# EUROPEAN PATENT APPLICATION

(11) **EP 2 762 715 A1**
(43) Date of publication of application: **06.08.2014**
(21) Application number: 12835275.4
(22) Date of filing: 26.09.2012
(51) Int. Cl.: F02M 21/02, F02B 29/04, F02B 37/00, F02B 37/04, F02B 43/00, F02D 19/02, F02D 23/00, F17C 13/00

(54) **DIRECT FUEL INJECTION DIESEL ENGINE APPARATUS**

(30) Priority: 28.09.2011 JP 2011212974
(71) Applicant: Mitsubishi Heavy Industries, Ltd., Tokyo 108-8215 (JP)
(72) Inventor: NAKAMICHI, Kenji, Tokyo 108-8215 (JP)
(74) Representative: HOFFMANN EITLE
(86) International application number: PCT/JP2012/074673
(87) International publication number: WO 2013/047574

(57) **Abstract**

The efficiency of a direct-injection diesel engine system that uses a low-temperature liquid fuel, such as LNG is improved by effectively utilizing the cooling energy of a high-pressure low-temperature liquid fuel. The system that uses high-pressure natural gas and combusts the engine fuel with intake air pressurized by a supercharger 30 includes a booster pump 3 that injects the high-pressure natural gas into a cylinder of the direct-injection diesel engine and pressurizes low-pressure liquefied natural gas introduced from an LNG tank 1; a cooling-energy recovery heat exchanger 51 that conducts heat exchange between a heat medium in a closed circuit and the high-pressure liquefied natural gas pressurized by the booster pump; and an air-cooling heat exchanger 54 that conducts heat exchange with the heat medium downstream of the cooling-energy recovery heat exchanger to cool air to be introduced into the supercharger and/or intake air compressed by the supercharger.

## Description

### {Technical Field}

The present invention relates to direct-injection diesel engine systems that use a low-temperature liquid fuel, such as liquefied natural gas, as a fuel, and particularly to a technology for utilizing the cooling energy of a high-pressure low-temperature liquid fuel pressurized by a booster pump installed in a fuel supply system for low-temperature liquid fuel.

### {Background Art}

Known diesel engines include direct-injection diesel engines and premixed injection mode diesel engines, of which direct-injection diesel engines using direct injection generally have higher efficiencies.

Direct-injection diesel engines, which directly inject a fuel into a cylinder at high pressure and combust the fuel therein, require a device for supplying the fuel at a pressure higher than the internal pressure of the cylinder. Recent diesel engines generally use superchargers, which are also effective in improving the power output and reducing emissions (discharged substances).

A growing number of recent diesel engines use liquefied natural gas (LNG) as a fuel, which is advantageous, for example, in terms of emissions. The use of LNG as a fuel is also becoming widespread in relatively large (large-output) diesel engines such as those for propelling ships (for marine use) and for driving generators (for industrial use).

The use of LNG as a fuel for large diesel engines as described above is increasing in direct-injection diesel engines, which directly inject high-pressure natural gas (CNG) as a fuel into a cylinder of a two-cycle diesel engine. The use of CNG as a fuel for direct-injection diesel engines requires an injection pressure higher than the internal pressure of the combustion chamber of the cylinder, which is at high pressure in a compressed state, in order to reliably inject and supply CNG to the combustion chamber.

To provide the desired injection pressure, an LNG booster pump for pressurizing LNG is installed in a fuel supply system for supplying CNG from an LNG tank to a direct-injection diesel engine to pressurize the LNG supplied from the LNG tank, which is at atmospheric pressure, into high-pressure LNG, and the high-pressure LNG is heated and vaporized, for example, using a heater.

In the known art related to internal combustion engines, for example, as disclosed in PTL 1 below, compressed air supplied from an exhaust gas turbine supercharger is cooled by an after-cooler before being supplied to an intake manifold.

PTL 2 below discloses that, by using the cooling energy of LNG stored in a cold storage medium, the cooling capacity when the outside air temperature is low is used at a high outside air temperature to perform cooling of intake air of a gas turbine.

In large turbosupercharger diesel engines, for example, as disclosed in PTL 3 below, an exhaust gas boiler and a power turbine are provided to recover energy from exhaust gas.

### {Citation List}

### {Patent Literature}

{PTL 1}
   Japanese Unexamined Utility Model Application, Publication No. S58-139524
{PTL 2}
   Japanese Unexamined Patent Application, Publication No. 2005-240639
{PTL 3}
   Japanese Translation of PCT International Application, Publication No. 2009-532614

### {Summary of Invention}

### {Technical Problem}

A direct-injection diesel engine system that uses LNG as a fuel has an LNG booster pump installed in the fuel supply system thereof to pressurize low-temperature LNG into high-pressure liquefied natural gas. Because the LNG booster pump is a pump that pressurizes very-low-temperature LNG as a working fluid, the pressurized high-pressure LNG possesses a large amount of cooling energy.

However, although the high-pressure liquefied natural gas in the direct-injection diesel engine system that uses liquefied natural gas as a fuel possesses a large amount of cooling energy, the reality is that the cooling energy is wasted without being effectively utilized.

On the other hand, there is a need for an improvement in the efficiency of a direct-injection diesel engine system that uses liquefied natural gas as a fuel. Therefore, it is desirable to effectively utilize the cooling energy possessed by the high-pressure liquefied natural gas to improve the efficiency of the direct-injection diesel engine system. That is, effective utilization of the cooling energy possessed by the high-pressure liquefied natural gas in the system, for example, for cooling would further improve the efficiency of the direct-injection diesel engine system.

In view of the aforementioned situation, an object of the present invention is to improve the efficiency of a direct-injection diesel engine system that uses a low-temperature liquid fuel, such as liquefied natural gas, as a fuel by effectively utilizing the cooling energy possessed by high-pressure low-temperature liquid fuel.

### {Solution to Problem}

To make an improvement in the aforementioned situation, the present invention have employed the following solutions.

A first aspect of a direct-injection diesel engine system according to the present invention is a direct-injection diesel engine system that uses a high-pressure gas generated by vaporizing a low-temperature liquid fuel as an engine fuel and that combusts the engine fuel with intake air pressurized by a supercharger, the direct-injection diesel engine system comprising: a booster pump installed in a low-temperature liquid fuel supply system that supplies and injects the high-pressure gas into a cylinder of the direct-injection diesel engine, the booster pump pressurizing a low-pressure low-temperature liquid fuel supplied from a low-temperature liquid fuel tank; a cooling-energy recovery heat exchanger that conducts heat exchange between a heat medium that circulates through a closed circuit and the high-pressure low-temperature liquid fuel pressurized by the booster pump to cool the heat medium; and an air-cooling heat exchanger that conducts heat exchange with the heat medium downstream of the cooling-energy recovery heat exchanger to cool outside air which is to be supplied to the supercharger and which is used as intake air and/or to cool intake air compressed by the supercharger.

According to the first aspect of the present invention, the direct-injection diesel engine system includes a booster pump installed in a low-temperature liquid fuel supply system that supplies and injects a high-pressure gas into a cylinder of the direct-injection diesel engine, the booster pump pressurizing a low-pressure low-temperature liquid fuel supplied from a low-temperature liquid fuel tank; a cooling-energy recovery heat exchanger that conducts heat exchange between a heat medium that circulates through a closed circuit and the high-pressure low-temperature liquid fuel pressurized by the booster pump to cool the heat medium; and an air-cooling heat exchanger that conducts heat exchange with the heat medium downstream of the cooling-energy recovery heat exchanger to cool air which is to be supplied to the supercharger and which is used as intake air and/or to cool intake air compressed by the supercharger. Therefore, the direct-injection diesel engine system can cool the heat medium, such as nitrogen, flowing through the cooling-energy recovery heat exchanger with the cooling energy possessed by the high-pressure low-temperature liquid fuel and can cool the air to be used as the intake air and/or the intake air compressed by the supercharger with the low-temperature heat medium.

Thus, the direct-injection diesel engine system can transfer the cooling energy possessed by the low-temperature liquid fuel to the heat medium and can effectively utilize the cooling energy to decrease the temperature of the air taken into the supercharger at the inlet thereof or the temperature of the intake air compressed by the supercharger, thereby improving the efficiency of the supercharger and the direct-injection diesel engine.

Examples of low-temperature liquid fuels used in this case include liquefied natural gas and liquefied petroleum gas.

A second aspect of a direct-injection diesel engine system according to the present invention is a direct-injection diesel engine system that uses a high-pressure gas generated by vaporizing a low-temperature liquid fuel as an engine fuel and that combusts the engine fuel with intake air pressurized by a supercharger, the direct-injection diesel engine comprising: a booster pump installed in a low-temperature liquid fuel supply system that supplies and injects the high-pressure gas into a cylinder of the direct-injection diesel engine, the booster pump pressurizing a low-pressure low-temperature liquid fuel supplied from a low-temperature liquid fuel tank; a cooling-energy recovery heat exchanger that conducts heat exchange between a heat medium that circulates through a closed circuit and the high-pressure low-temperature liquid fuel pressurized by the booster pump to cool the heat medium; a boil-off gas reliquefier located downstream of the cooling-energy recovery heat exchanger, for reliquifying boil-off gas of the low-temperature liquid fuel using the heat medium as a cooling energy source; and an air-cooling heat exchanger that conducts heat exchange with the heat medium downstream of the boil-off gas reliquefier to cool air which is to be supplied to the supercharger and which is used as intake air and/or to cool intake air compressed by the supercharger.

According to the second aspect of the present invention, the direct-injection diesel engine system includes a booster pump installed in a low-temperature liquid fuel supply system that supplies and injects a high-pressure gas into a cylinder of the direct-injection diesel engine, the booster pump pressurizing a low-pressure low-temperature liquid fuel supplied from a low-temperature liquid fuel tank; a cooling-energy recovery heat exchanger that conducts heat exchange between a heat medium that circulates through a closed circuit and the high-pressure low-temperature liquid fuel pressurized by the booster pump to cool the heat medium; a boil-off gas reliquefier located downstream of the cooling-energy recovery heat exchanger, for reliquifying boil-off gas of the low-temperature liquid fuel using the heat medium as a cooling energy source; and an air-cooling heat exchanger that conducts heat exchange with the heat medium downstream of the boil-off gas reliquefier to cool air which is to be supplied to the supercharger and which is used as intake air and/or to cool intake air compressed by the supercharger. Therefore, the direct-injection diesel engine system is able to cool the heat medium, such as nitrogen, flowing through the cooling-energy recovery heat exchanger with the cooling energy possessed by the high-pressure low-temperature liquid fuel, able to use the cooling energy of the heat medium to reliquefy the boil-off gas in the boil-off gas reliquefier, and able to cool the air to be used as the intake air and/or the compressed intake air with the low-temperature heat medium.

Thus, the direct-injection diesel engine system can transfer the cooling energy possessed by the low-temperature liquid fuel to the heat medium and can effectively utilize the cooling energy to reliquefy the boil-off gas and to decrease the temperature of the air taken into the supercharger at the inlet thereof or the temperature of the compressed intake air, thereby improving the efficiency of the supercharger and the direct-injection diesel engine. In this case, after the cooling energy is utilized to reliquefy the boil-off gas, the heat medium possesses a sufficient amount of cooling energy to cool the air.

Examples of low-temperature liquid fuels used in this case include liquefied natural gas and liquefied petroleum gas.

A third aspect of a direct-injection diesel engine system according to the present invention is a direct-injection diesel engine system that uses a high-pressure gas generated by vaporizing a low-temperature liquid fuel as an engine fuel and that combusts the engine fuel with intake air pressurized by a supercharger, the direct-injection diesel engine comprising: a booster pump installed in a low-temperature liquid fuel supply system that supplies and injects the high-pressure gas into a cylinder of the direct-injection diesel engine, the booster pump pressurizing a low-pressure low-temperature liquid fuel supplied from a low-temperature liquid fuel tank; a cooling-energy recovery heat exchanger that conducts heat exchange between a heat medium that circulates through a closed circuit and the high-pressure low-temperature liquid fuel pressurized by the booster pump to cool the heat medium; a boil-off gas reliquefier located downstream of the cooling-energy recovery heat exchanger, for reliquifying boil-off gas of the low-temperature liquid fuel using the heat medium as a cooling energy source; a heat medium/water heat exchanger located downstream of the boil-off gas reliquifier, for conducting heat exchange between the heat medium and water that circulates through a closed circuit to cool the water; and an air-cooling heat exchanger that conducts heat exchange with the water cooled by the heat medium/water heat exchanger to cool air which is to be supplied to the supercharger and which is used as intake air and/or to cool intake air compressed by the supercharger.

According to the third aspect of the present invention, the direct-injection diesel engine system includes a booster pump installed in a low-temperature liquid fuel supply system that supplies and injects a high-pressure gas into a cylinder of the direct-injection diesel engine, the booster pump pressurizing a low-pressure low-temperature liquid fuel supplied from a low-temperature liquid fuel tank; a cooling-energy recovery heat exchanger that conducts heat exchange between a heat medium that circulates through a closed circuit and the high-pressure low-temperature liquid fuel pressurized by the booster pump to cool the heat medium; a boil-off gas reliquefier located downstream of the cooling-energy recovery heat exchanger, for reliquifying boil-off gas of the low-temperature liquid fuel using the heat medium as a cooling energy source; a heat medium/water heat exchanger located downstream of the foil-off gas reliquifier, for conducting heat exchange between the heat medium and water that circulates through a closed circuit to cool the water; and an air-cooling heat exchanger that conducts heat exchange with the water cooled by the heat medium/water heat exchanger to cool air which is to be supplied to the supercharger and which is used as intake air and/or to cool intake air compressed by the supercharger. Therefore, the direct-injection diesel engine system initially cools the heat medium, such as nitrogen, flowing through the cooling-energy recovery heat exchanger with the cooling energy possessed by the high-pressure low-temperature liquid fuel. The cooling energy of the heat medium cooled by the high-pressure low-temperature liquid fuel is initially used to reliquefy the boil-off gas in the boil-off gas reliquefier and is then used to cool the cooling medium, i.e., water, in the air-cooling heat exchanger, and the cold water can be used to cool the air to be used as the intake air and/or the compressed intake air.

Thus, the direct-injection diesel engine system can transfer the cooling energy possessed by the low-temperature liquid fuel to the heat medium and can effectively utilize the cooling energy to reliquefy the boil-off gas and to decrease the temperature of the air taken into the supercharger at the inlet thereof or the temperature of the compressed intake air via water, thereby improving the efficiency of the supercharger and the direct-injection diesel engine. In this case, after the cooling energy is utilized to reliquefy the boil-off gas, the heat medium possesses a sufficient amount of cooling energy to manufacture the cold water for cooling the air.

Examples of low-temperature liquid fuels used in this case include liquefied natural gas and liquefied petroleum gas.

In the above invention (first and second aspects), the direct-injection diesel engine systems preferably further include one or more cooling-energy utilizing devices provided upstream of the air-cooling heat exchanger and which use the heat medium cooled by the cooling-energy recovery heat exchanger as a cooling energy source. This allows the large amount of cooling energy possessed by the low-temperature liquid fuel to be effectively utilized not only for the cooling of the air to be used as the intake air, but also for one or more cooling-energy utilizing devices via a heat medium.

Because the low-temperature liquid fuel, such as liquefied natural gas, possesses a large amount of cooling energy, the heat medium that has received cooling energy from the low-temperature liquid fuel possesses a sufficient amount of cooling energy to cool the combustion air after the cooling energy is used in one or more cooling-energy utilizing devices.

In the above invention (third aspect), the direct-injection diesel engine system preferably further include one or more cooling-energy utilizing devices provided upstream of the air-cooling heat exchanger and which use the water cooled by the heat medium/water heat exchanger as a cooling energy source. This allows the large amount of cooling energy possessed by the low-temperature liquid fuel to be effectively utilized not only for the cooling of the air to be used as the intake air, but also for one or more cooling-energy utilizing devices via a heat medium.

An example of a preferred cooling-energy utilizing device that performs cooling with the cooling energy of the heat medium is a cooling energy source (first cooling energy source) used in a heat exchanger of a device for reliquefying boil-off gas of a low-temperature liquid fuel (such as liquefied natural gas or liquefied petroleum gas).

An example of a preferred cooling-energy utilizing device that performs cooling with the cooling energy of the heat medium or the cooling energy of the water cooled by the heat medium/water heat exchanger is a cooling energy source (second cooling energy source) used to cool a main engine of a direct-injection diesel engine, to cool a main generator that is driven to generate electrical power in a direct-injection diesel engine, to cool an auxiliary engine and/or an auxiliary generator if one is provided, or to cool and condense steam from an exhaust heat recovery boiler.

The first and second cooling energy sources do not necessarily have to be provided; one or both of them may be installed depending on conditions, such as the system configuration. Specifically, the devices for which the cooling energy is used can be selected depending on the system configuration, and the number of devices for which the cooling energy is utilized is not limited; for example, the second cooling energy source may be provided in addition to the first cooling energy source so that the cooling energy is used to cool both the main engine and the main generator.

In the above invention, the direct-injection diesel engine systems preferably further include a cold storage unit in the closed circuit through which the heat medium flows or a bypass channel branched off from the closed circuit, which allows any excess cooling energy to be stored and utilized, depending on the situation.

In the above invention, the direct-injection diesel engine systems preferably further include a heater that consumes excess cooling energy in the closed circuit through which the heat medium flows, which allows excess cooling energy to be forcedly consumed when generated in larger amounts than necessary. The heater used in this case may use, for example, water as a heating source.

In the above invention, the direct-injection diesel engine systems preferably further include a supercharger-driven generator that is driven by power output from the supercharger, which allows the energy of exhaust gas to be effectively utilized to derive electrical power from the supercharger-driven generator, thereby further improving the operating efficiency of the direct-injection diesel engine system.

In the above invention, the direct-injection diesel engine systems preferably further include a reheater that heats exhaust gas discharged from the supercharger, an exhaust gas turbine that is driven by the exhaust gas whose temperature has risen by passing through the reheater, and a turbine-driven generator that is driven by the exhaust gas turbine, which allows the energy of the exhaust gas discharged from the supercharger to be more effectively utilized to derive electrical power from the turbine-driven generator, thereby further improving the operating efficiency of the direct-injection diesel engine system.

### {Advantageous Effects of Invention}

According to the invention described above, a direct-injection diesel engine system that uses a low-temperature liquid fuel, such as liquefied natural gas, as a fuel can be provided as a highly efficient and reliable direct-injection diesel engine system that can effectively utilize the cooling energy possessed by a high-pressure low-temperature liquid fuel pressurized by a booster pump for pressurizing a low-temperature liquid fuel.

### {Brief Description of Drawings}

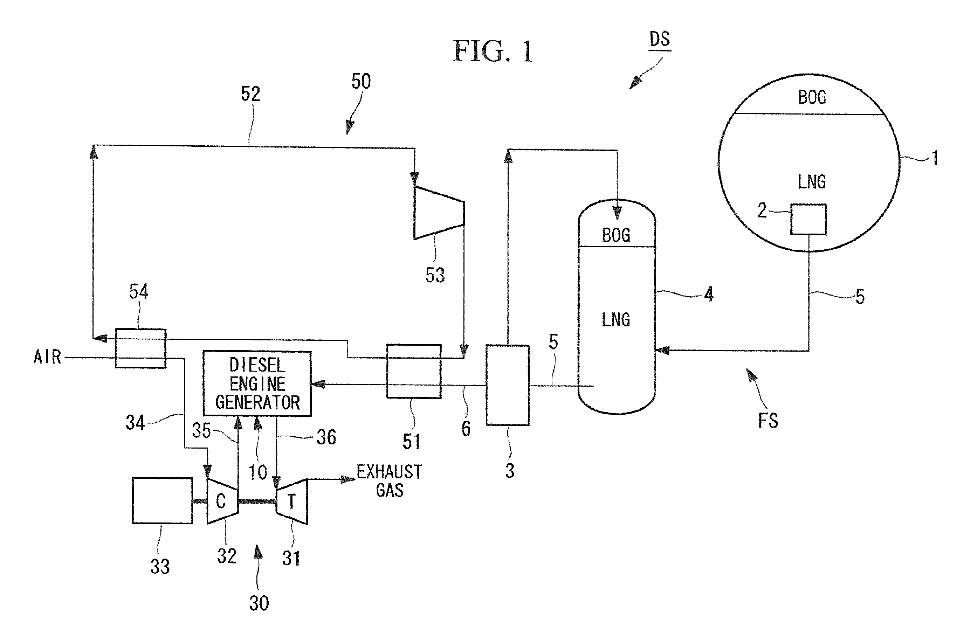

{Fig. 1}
   Fig. 1 is a system diagram illustrating an example configuration of a relevant part of a first embodiment of a direct-injection diesel engine system according to the present invention.
{Fig. 2}
   Fig. 2 is a system diagram illustrating an example configuration of a relevant part of a second embodiment of a direct-injection diesel engine system according to the present invention.
{Fig. 3}
   Fig. 3 is a system diagram illustrating an example configuration of a relevant part of a third embodiment of a direct-injection diesel engine system according to the present invention.
{Fig. 4}
   Fig. 4 is a system diagram illustrating an example configuration of a relevant part of a fourth embodiment of a direct-injection diesel engine system according to the present invention.
{Fig. 5}
   Fig. 5 is a system diagram illustrating an example configuration of a relevant part of a fifth embodiment of a direct-injection diesel engine system according to the present invention.
{Fig. 6}
   Fig. 6 is a system diagram illustrating an example configuration of a relevant part of a sixth embodiment of a direct-injection diesel engine system according to the present invention.
{Fig. 7}
   Fig. 7 is a system diagram illustrating an example configuration of a relevant part of a seventh embodiment of a direct-injection diesel engine system according to the present invention.
{Fig. 8}
   Fig. 8 is a system diagram illustrating an example configuration of a relevant part of an eighth embodiment of a direct-injection diesel engine system according to the present invention.
{Fig. 9}
   Fig. 9 is a system diagram illustrating an example configuration of a relevant part of a ninth embodiment of a direct-injection diesel engine system according to the present invention.
{Fig. 10}
   Fig. 10 is a system diagram illustrating an example configuration of a relevant part of a tenth embodiment of a direct-injection diesel engine system according to the present invention.
{Fig. 11}
   Fig. 11 is a system diagram illustrating an example configuration of a relevant part of an eleventh embodiment of a direct-injection diesel engine system according to the present invention.

### {Description of Embodiments}

Embodiments of direct-injection diesel engine systems that operate using a low-temperature liquid fuel as a fuel according to the present invention will be described below with reference to the drawings.

Although the embodiments described below illustrate the low-temperature liquid fuel as liquefied natural gas (LNG), they may be applied to other low-temperature liquid fuels, including liquefied petroleum gas (LPG).

### <First Embodiment>

A direct-injection diesel engine system DS illustrated in Fig. 1 is an example configuration applied to a diesel engine generator 10 that generates electrical power by driving a main generator coupled to an output shaft of a direct-injection diesel engine (hereinafter referred to as "main engine").

The illustrated direct-injection diesel engine system DS is a system that uses high-pressure natural gas (CNG) produced by pressurizing and vaporizing LNG as an engine fuel for the main engine and that combusts the engine fuel with intake air pressurized by a supercharger 30 to generate power output, and is used as a diesel engine generator 10, such as relatively large high-output emergency generator equipment.

In the embodiment described below, the main engine of the diesel engine generator 10 that drives the main generator to generate electrical power is a direct-injection two-cycle diesel engine that operates using CNG produced by pressurizing and vaporizing LNG as a fuel.

To supply and inject CNG into the cylinder of the main engine, the direct-injection diesel engine system DS includes a liquefied natural gas fuel supply system (fuel supply system) FS serving as piping that guides LNG stored inside an LNG tank 1 to the main engine.

The fuel supply system FS includes a booster pump 3 that pressurizes low-pressure LNG introduced from the liquefied natural gas tank (LNG tank) 1 by a submerged pump 2. The booster pump 3 is a pump for pressurizing the LNG so that the pressure of the vaporized CNG is higher than the internal pressure of the cylinder of the main engine, which is at a high pressure in a compressed state, in order to inject and supply the fuel to the cylinder. The booster pump 3 is, for example, a piston pump, and the LNG pressurized by the booster pump 3 is referred to as high-pressure LNG.

A suction drum 4 that functions as a buffer is installed upstream of the booster pump 3. In this case, the LNG pressurized by the booster pump 3 therefore is actually supplied from the suction drum 4.

If necessary, a heating means (not shown), such as an LNG heater, is disposed downstream of the booster pump 3 to vaporize the pressurized high-pressure LNG into CNG. A cooling-energy recovery heat exchanger 51 is disposed upstream of the heating means to cool a heat medium, which will be described later, with the high-pressure LNG.

That is, because the booster pump 3 described above is a pump for pressurizing low-pressure LNG into high-pressure LNG to reliably inject and supply the engine fuel, i.e., CNG, to the cylinder of the main engine, which is at a high-pressure state by compression, the booster pump 3 provides a sufficient pressure to inject and supply the CNG produced by vaporizing the high-pressure LNG to the cylinder. Although the fuel, i.e., LNG, needs to be heated to room temperature, it may be heated to a temperature at or below 0°C, for example, about -50°C.

As shown, reference sign 5 is an LNG pipe through which the LNG flows, and reference sign 6 is a high-pressure LNG pipe through which the high-pressure LNG flows.

An air intake system that supplies combustion air to the main engine described above includes a supercharger 30. The supercharger 30 includes a turbine 31 that is powerd by exhaust gas discharged from the main engine, and a compressor 32 coupled to the same shaft as the turbine 31. Specifically, the supercharger 30 rotates the turbine 31 by means of the energy possessed by the exhaust gas from the main engine to drive the compressor 32 on the same shaft as the turbine 31, thereby introducing and compressing air from the atmosphere. By installing the supercharger 30, the combustion air can be supplied with compressed intake air, which increases the air density of the combustion air supplied to the main engine.

In this embodiment, the supercharger 30 also includes an auxiliary generator 33 on the same shaft as the turbine 31 and the compressor 32.

The auxiliary generator 33 is a supercharger-driven generator that is driven by the power output from the supercharger 30 and can effectively utilize the energy of the exhaust gas to generate electrical power. That is, because the auxiliary generator 33 is driven together with the compressor 32 by the power output of the turbine 31 in order to generate electrical power, the electrical power generated by effectively utilizing the power output from the supercharger 30 can be provided in addition to the electrical power generated by the main generator of the diesel engine generator 10, which is effective in improving the efficiency of the direct-injection diesel engine system DS. The electrical power generated by the auxiliary generator 33 can be supplied, for example, to a motor of a blower 53 disposed in a cooling-energy recovery unit 50, which will be described later, to reduce consuming power which is from an external power supply by the direct-injection diesel engine system DS.

In Fig. 1, reference sign 34 is an intake-air inlet pipe, reference sign 35 is an intake air pipe, and reference sign 36 is an exhaust gas pipe.

The direct-injection diesel engine system DS includes a closed-circuit cooling-energy recovery unit 50. The cooling-energy recovery unit 50 includes a channel pipe 52 through which a heat medium, such as nitrogen, is circulated, and a blower 53 that is driven, for example, by a motor (not shown) to pump and circulate the nitrogen gas through the channel pipe 52.

The nitrogen gas pumped by the blower 53 flows through the cooling-energy recovery heat exchanger 51 and then an air-cooling heat exchanger 54 disposed downstream thereof in the flow direction and is taken into the blower 53 again. Thus, the nitrogen gas circulates through the closed-circuit channel pipe 52 with repeated temperature changes by heat exchange.

The cooling-energy recovery heat exchanger 51 is a heat exchanger that exchanges heat between the high-pressure LNG pressurized by the booster pump 3 and the nitrogen gas to cool the nitrogen gas with the cooling energy possessed by the high-pressure LNG. In other words, the temperature of the high-pressure LNG rises as it absorbs heat from the nitrogen gas, which is at a higher temperature, by heat exchange with the nitrogen gas while flowing through the cooling-energy recovery heat exchanger 51.

In this case, therefore, the nitrogen gas is used as a heat source for increasing the temperature of the high-pressure LNG or as a heat source for vaporizing at least part of the high-pressure LNG.

As a result, the heating source, such as an LNG heater, for vaporizing the high-pressure LNG into CNG requires a smaller amount of heat to vaporize the high-pressure LNG, or no LNG heater is required if the nitrogen gas has a sufficient amount of heat. This reduces the power consumption required to heat the LNG heater and thus improves the efficiency of the direct-injection diesel engine system DS.

The air-cooling heat exchanger 54 is a heat exchanger that exchanges heat between the nitrogen gas flowing through the channel pipe 52 and the air introduced from the atmosphere and flowing through the intake-air inlet pipe 34, the heat exchange by the air-cooling heat exchanger 54 is conducted downstream of the cooling-energy recovery heat exchanger 51 to cool the intake air introduced into and compressed by the supercharger 30. After the temperature of the nitrogen gas rises as it cools the intake air in the air-cooling heat exchanger 54 by absorbing heat from the intake air, the nitrogen gas returns to the blower 53 through the channel pipe 52.

By installing the air-cooling heat exchanger 54, the intake air to be used as combustion air in the main engine can be cooled to change the air density thereof, which is effective in improving the efficiency of the supercharger 30 and the operating efficiency of the main engine.

Specifically, if the temperature of the intake air at the inlet of the supercharger 30 is decreased by installing the air-cooling heat exchanger 54, the air density of the intake air changes, and accordingly, the volume flow rate of the intake air decreases for the same weight flow rate. This reduces the power required to drive the compressor 32 in the supercharger 30 and thus improves the efficiency of the supercharger 30.

In other words, the introduction of low-temperature intake air into the supercharger 30 allows high-density intake air efficiently compressed by less driving power of the compressor 32 to be supplied to the main engine. This increases the excess power output of the turbine 31, which can be utilized, for example, to increase the amount of electrical power generated by the auxiliary generator 33 described above or to reduce the size of the supercharger 30.

The decreased temperature of the intake air at the inlet of the supercharger 30 also results in a longer life because it is advantageous in terms of material creeping of the constituent elements of the supercharger 30, and is also advantageous for improving the performance of the supercharger 30 because it can be set to a higher operating rotational speed.

In the cooling-energy recovery heat exchanger 51, the temperature of the nitrogen gas to be supplied to the air-cooling heat exchanger 54 drops as it is cooled by the pressurized high-pressure LNG, which is typically at a low temperature, i.e., about -160°C, the nitrogen gas has a sufficiently low temperature to cool air at normal atmospheric temperature.

In addition to cooling the intake air, as described above, the air-cooling heat exchanger 54 can be used, for example, to cool the intake air compressed by the compressor 32 of the supercharger 30. Specifically, as the air-cooling heat exchanger 54, a heat exchanger dedicated to cooling the intake air at the supercharger inlet and a heat exchanger dedicated to cooling the compressed intake air may be separately installed, or both the intake air at the supercharger inlet and the compressed intake air may be cooled by the same heat exchanger.

The above-described direct-injection diesel engine system DS includes the booster pump 3, which is installed in the fuel supply system FS that supplies and injects CNG into the cylinder of the main engine (direct-injection diesel engine) and which pressurizes the low-pressure LNG introduced from the LNG tank 1, the cooling-energy recovery heat exchanger 51, which exchanges heat between the heat medium, i.e., nitrogen gas, that circulates through the closed circuit and the high-pressure LNG pressurized by the booster pump 3 to cool the heat medium, and the air-cooling heat exchanger 54, which exchanges heat with the nitrogen gas downstream of the cooling-energy recovery heat exchanger 51 to cool the air which is to be introduced into the supercharger 30 and which is used as the intake air, and/or the intake air compressed by the compressor 30. Therefore, the direct-injection diesel engine system DS can cool the nitrogen gas flowing through the cooling-energy recovery heat exchanger 51 with the cooling energy possessed by the high-pressure LNG, and can cool the air to be used as the intake air and/or the intake air compressed by the supercharger 30 with the low-temperature nitrogen gas.

Thus, the direct-injection diesel engine system DS can transfer the cooling energy possessed by the LNG to the heat medium, i.e., nitrogen gas, and can effectively utilize the cooling energy to decrease the temperature of the air taken into the supercharger 30 at the inlet thereof or the temperature of the combustion air supplied to the diesel engine generator 10, thereby improving the efficiency of the supercharger 30 and the main engine.

As a result, in the direct-injection diesel engine system DS, which uses a gas generated by vaporizing a low-temperature liquid fuel, such as LNG, as a fuel, it is possible to provide a highly efficient and reliable direct-injection diesel engine system, effectively utilizing the cooling energy possessed by high-pressure liquefied natural gas which is pressurized by a booster pump for pressurizing liquefied natural gas.

### <Second Embodiment>

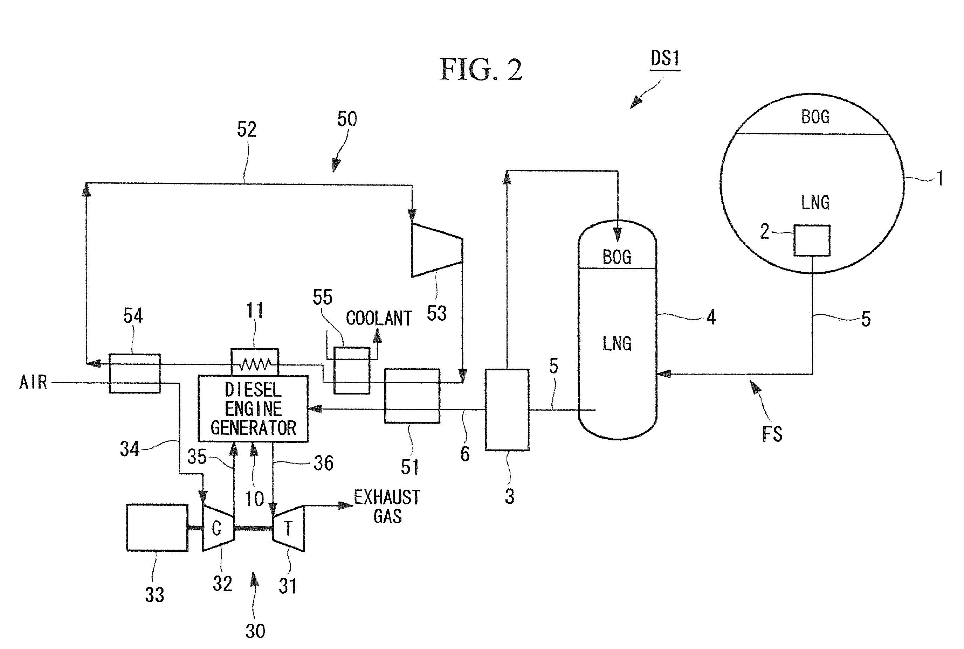

A second embodiment of a direct-injection diesel engine system according to the present invention will be described below with reference to Fig. 2. The same parts as in the embodiment described above are indicated by the same reference signs, and the detailed descriptions thereof are omitted herein.

As in the embodiment described above, a direct-injection diesel engine system DS1 illustrated in Fig. 2 is an example configuration applied to a diesel engine generator 10 that generates electrical power by driving a main generator coupled to an output shaft of a main engine, i.e., a direct-injection diesel engine.

In the cooling-energy recovery unit 50 illustrated in Fig. 2, two cooling-energy utilizing devices are arranged in series upstream of the air-cooling heat exchanger 54 to use the heat medium, i.e., nitrogen gas, cooled by the cooling-energy recovery heat exchanger 51 as a cooling energy source.

The illustrated cooling-energy utilizing devices are, for example, in order from the upstream side, a reliquefying heat exchanger 55 that cools a heat medium (refrigerant) for reliquefying boil-off gas (BOG) of the stored LNG and a jacket-cooling-water cooler 11 that cools the main engine.

The reliquefying heat exchanger 55 is a heat exchanger that constitutes a device for cooling and reliquefying boil-off gas of the LNG and uses the nitrogen gas cooled by the high-pressure LNG in the cooling-energy recovery heat exchanger 51 as the cooling energy source for cooling the heat medium used for reliquefaction.

Specifically, in a BOG reliquefier, the temperature of a refrigerant circulating through a closed circuit drops as the refrigerant is cooled by heat exchange with the low-temperature nitrogen gas cooled by the high-pressure LNG, and the temperature of the refrigerant then rises as the refrigerant is deprived of the cooling energy by reliquefaction of BOG. Thus, the cooling energy of the high-pressure LNG is used as the cooling energy source for reliquefying BOG.

In the jacket-cooling-water cooler 11, the jacket cooling water (heat medium) for the main engine is cooled by heat exchange with the nitrogen gas cooled by the high-pressure LNG in the cooling-energy recovery heat exchanger 51. In this case, although the temperature of the nitrogen gas supplied to the jacket-cooling-water cooler 11 has risen after it passes through the reliquefying heat exchanger 55, a sufficient amount of cooling energy to cool the jacket cooling water remains because the high-pressure LNG has a large amount of cooling energy.

The nitrogen gas that has passed through the reliquefying heat exchanger 55 and the jacket-cooling-water cooler 11 is supplied to the air-cooling heat exchanger 54 to cool the intake air, which can be sufficiently cooled with the remaining cooling energy because the cooling of the intake air does not require a large amount of cooling energy.

Thus, even if the reliquefying heat exchanger 55 and the jacket-cooling-water cooler 11 are provided between the cooling-energy recovery heat exchanger 51 and the air-cooling heat exchanger 54, the large amount of cooling energy possessed by the LNG can be effectively utilized not only for the cooling of the air to be used as the intake air, but also for the two cooling-energy utilizing devices via a heat medium.

If the jacket cooling water is cooled as described above, the heat medium circulated through the channel pipe 52, i.e., nitrogen gas, may be replaced with air or oxygen. Unlike leakage of nitrogen gas from the jacket-cooling-water cooler 11, leakage of such a heat medium does not decrease the oxygen density and therefore does not adversely affect the engine performance.

Alternatively, the heat medium circulated through the channel pipe 52 may be helium gas or neon.

Examples of preferred cooling-energy utilizing devices that perform cooling with the cooling energy of the heat medium, specifically, cooling-energy utilizing devices that can utilize the cooling energy possessed by the heat medium, i.e., nitrogen gas, cooled by the cooling energy of the LNG, include the following first and second cooling energy sources.

The first cooling energy source may be, for example, a cooling energy source used in a heat exchanger of a BOG reliquefier for reliquefying boil-off gas (BOG) of a low-temperature liquid fuel. In this case, the cooling energy may be utilized not only to reliquefy BOG generated in the components of the direct-injection diesel engine system DS1, such as the LNG tank 1 and the suction drum 4, but also to reliquefy BOG generated in adjacent devices.

The second cooling energy source may be, for example, a cooling energy source used to cool a main engine of a direct-injection diesel engine, to cool a main generator that is driven to generate electrical power in a direct-injection diesel engine, to cool an auxiliary engine and/or an auxiliary generator, in the case where the auxiliary engine and/or the auxiliary generator is provided, or to cool and condense steam from an exhaust heat recovery boiler, in the case where the exhaust heat recovery boiler is provided.

For such cooling-energy utilizing devices, when the first and second cooling energy sources described above are compared, the first cooling energy source generally requires a larger cooling energy. Accordingly, it is desirable to dispose the cooling energy source that requires a larger cooling energy, generally the first cooling energy source, on the upstream side, i.e., closer to the cooling-energy recovery heat exchanger 51, in the cooling-energy recovery unit 50.

The first and second cooling energy sources do not necessarily have to be provided. One of them may be installed, or a set of the first and the second cooling energy sources may be installed, depending on various conditions, such as the system configuration.

Specifically, one or more cooling-energy utilizing devices that use the nitrogen gas cooled by the cooling-energy recovery heat exchanger 51 as a cooling energy source may be provided upstream of the air-cooling heat exchanger 54. The devices for which the cooling energy is used can be selected depending on the conditions, such as the system configuration and the amount of cooling energy, and the number of devices for which the cooling energy is utilized is not limited; for example, the second cooling energy source may be provided in addition to the first cooling energy source so that the second cooling energy is used to cool both the main engine and the main generator.

### <Third Embodiment>

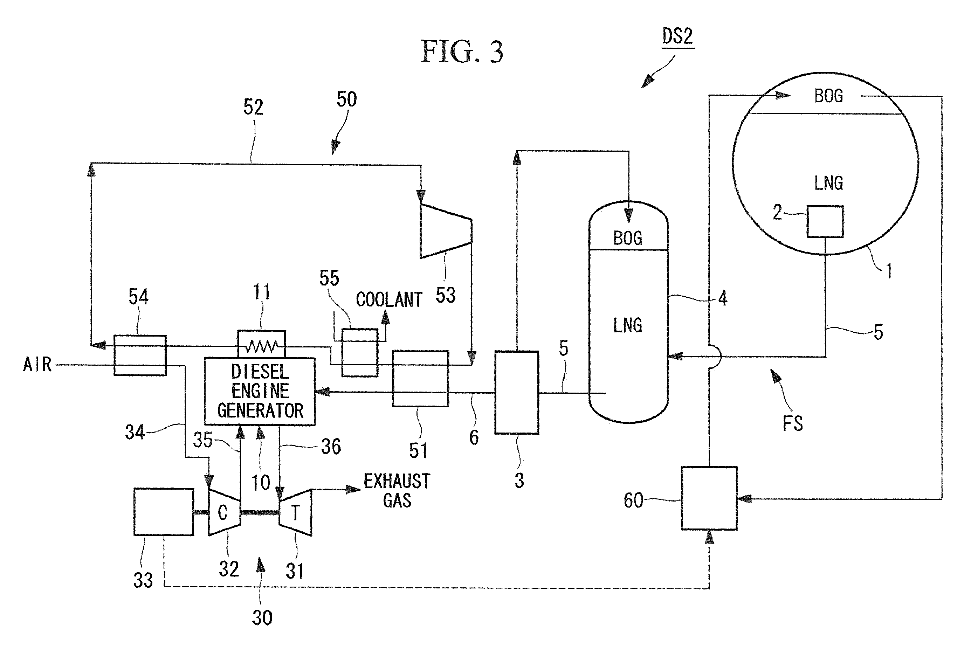

A third embodiment of a direct-injection diesel engine system according to the present invention will be described below with reference to Fig. 3. The same parts as in the embodiments described above are indicated by the same reference signs, and the detailed descriptions thereof are omitted herein.

A direct-injection diesel engine system DS2 illustrated in Fig. 3 includes a BOG reliquefier 60 that reliquefies the BOG in the LNG tank 1. The BOG reliquefier 60 is supplied with the electrical power generated by the auxiliary generator 33 described above. Thus, the electrical power generated by the auxiliary generator 33 can be utilized as at least part of the electrical power required to operate the BOG reliquefier 60 to reduce the amount of electrical power supplied from an external power supply, thereby improving the operating efficiency of the direct-injection diesel engine system DS2.

### <Fourth Embodiment>

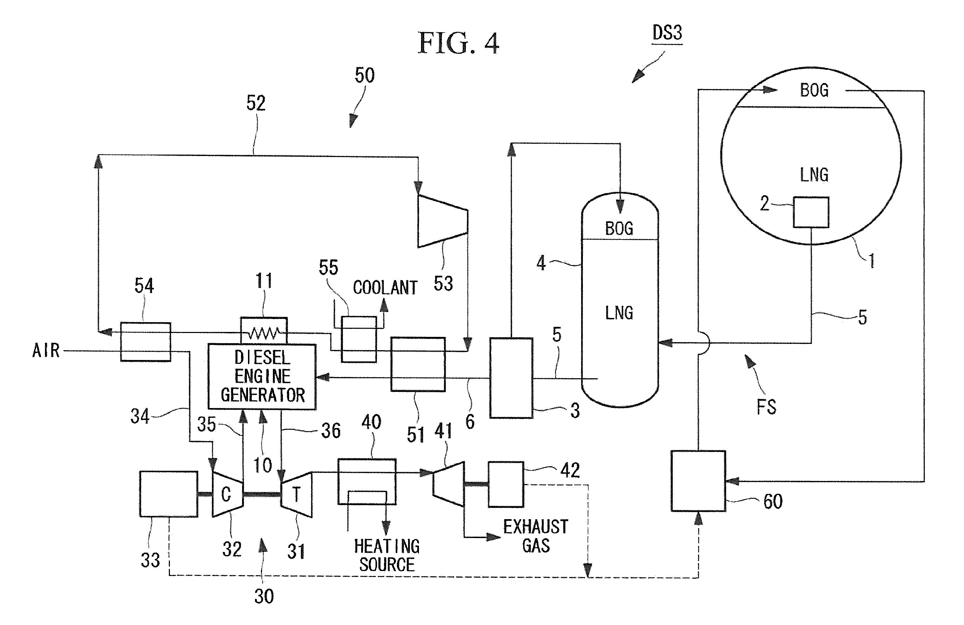

A fourth embodiment of a direct-injection diesel engine system according to the present invention will be described below with reference to Fig. 4. The same parts as in the embodiments described above are indicated by the same reference signs, and the detailed descriptions thereof are omitted herein.

A direct-injection diesel engine system DS3 illustrated in Fig. 4 includes a reheater 40 that heats the exhaust gas discharged from the supercharger 30, an exhaust gas turbine 41 that is driven by the exhaust gas whose temperature has risen after it passes through the reheater 40, and a turbine-driven generator 42 that is driven by the exhaust gas turbine 41, and is configured to recycle the energy possessed by the exhaust gas that has done work in the turbine 31 of the supercharger 30.

Specifically, the exhaust gas that has done work in the turbine 31 is guided to and reheated by the reheater 40. The reheater 40 is supplied with a high-temperature heating source by which the exhaust gas is heated to a higher temperature.

The resulting high-temperature exhaust gas is guided to the exhaust gas turbine 41 and does work to rotate the exhaust gas turbine 41 before being discharged. The exhaust gas to be discharged is subjected to necessary treatment, for example, for environmental reasons. The turbine-driven generator 42 is driven by the power output of the exhaust gas turbine 41, and the electrical power generated by the turbine-driven generator 42 is supplied, for example, to the BOG reliquefier 60.

This configuration allows the energy of the exhaust gas discharged from the main engine to be more effectively utilized to derive electrical power from the turbine-driven generator 42. Thus, the electrical power generated by the turbine-driven generator 42 can be utilized, for example, in the BOG reliquefier 60 to reduce the amount of electrical power supplied from an external power supply, thereby further improving the operating efficiency of the direct-injection diesel engine system DS3.

### <Fifth Embodiment>

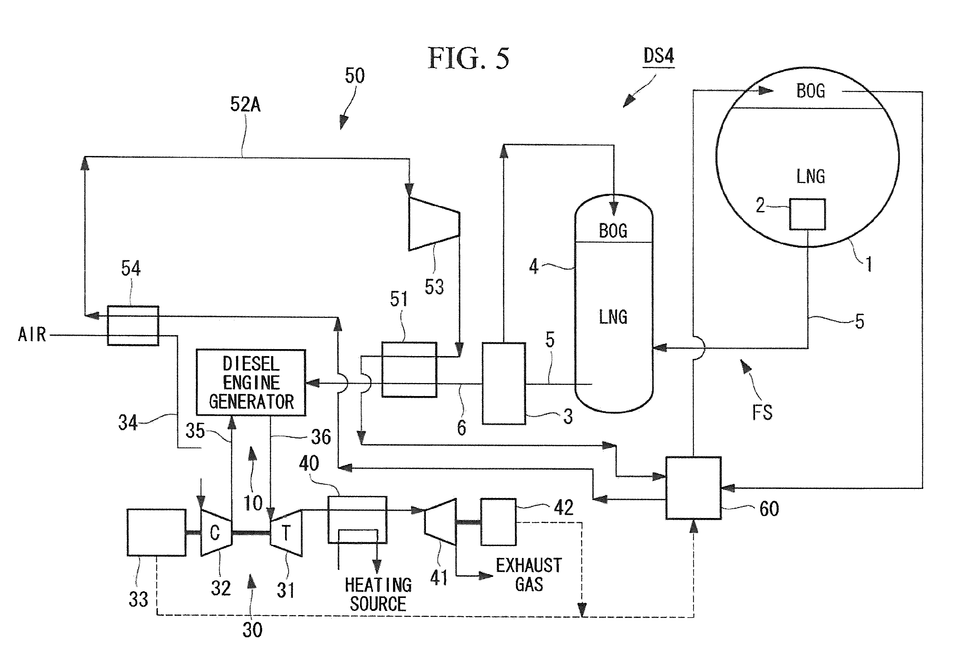

A fifth embodiment of a direct-injection diesel engine system according to the present invention will be described below with reference to Fig. 5. The same parts as in the embodiments described above are indicated by the same reference signs, and the detailed descriptions thereof are omitted herein.

A direct-injection diesel engine system DS4 illustrated in Fig. 5 includes a BOG reliquefier 60 that reliquefies boil-off gas (BOG) of the LNG using a heat medium as a cooling energy source downstream of the cooling-energy recovery heat exchanger 51. Specifically, the illustrated BOG reliquefier 60 utilizes the nitrogen gas cooled by the LNG in the cooling-energy recovery heat exchanger 51 as the cooling energy source for reliquefying the BOG of the LNG.

The nitrogen gas whose temperature has risen after the cooling energy thereof is used in the BOG reliquefier 60 is guided to the air-cooling heat exchanger 54 to cool the air to be introduced into the supercharger 30 and used as the intake air, as in the embodiments described above. Specifically, the BOG reliquefier 60 is disposed between the cooling-energy recovery heat exchanger 51 and the air-cooling heat exchanger 54 in a channel pipe (circulation path) 52A that forms a closed circuit for the nitrogen gas so that the nitrogen gas, whose temperature has risen after the cooling energy thereof is used in the BOG reliquefier 60, cools the intake air downstream of the BOG reliquefier 60.

A sufficient amount of cooling energy to cool the intake air in the air-cooling heat exchanger 54 can be ensured because the LNG possesses a large amount of cooling energy.

### <Sixth Embodiment>

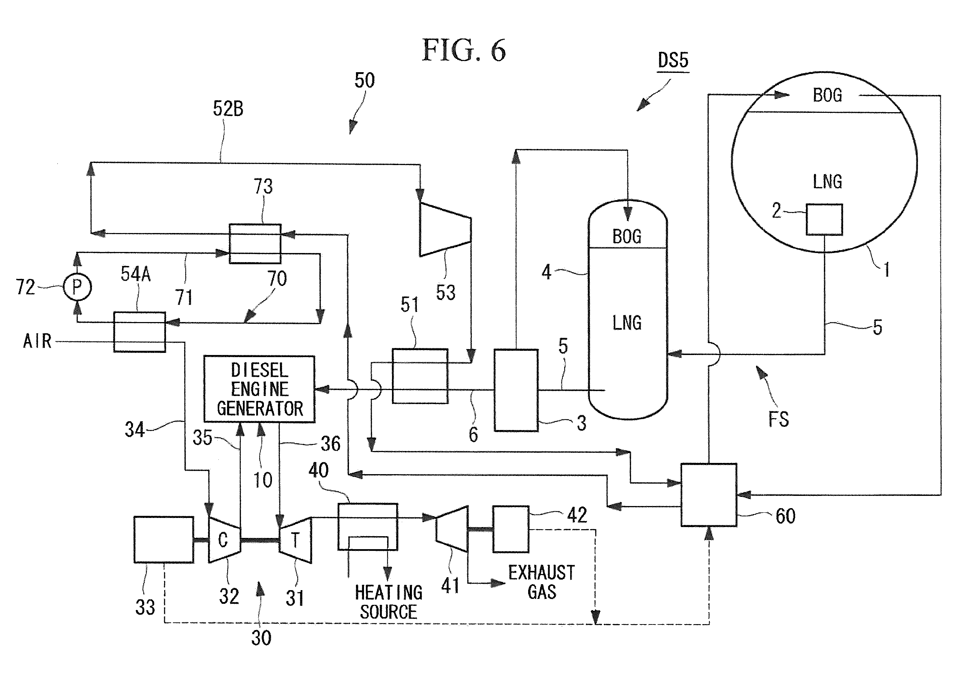

A sixth embodiment of a direct-injection diesel engine system according to the present invention will be described below with reference to Fig. 6. The same parts as in the embodiments described above are indicated by the same reference signs, and the detailed descriptions thereof are omitted herein.

A direct-injection diesel engine system DS5 illustrated in Fig. 6 is configured to cool the intake air by heat exchange between water cooled by the nitrogen gas (cold water) and the air, instead of cooling the intake air by heat exchange between the nitrogen gas and the air, as in the embodiments described above.

Specifically, this embodiment has a feature having a closed-circuit water circulation channel 70 through which water is circulated. This water circulation circuit 70 includes a closed-circuit channel pipe 71, a water pump 72, a heat medium / water heat exchanger 73, and an air-cooling heat exchanger 54A.

The water pump 72 is a pump that creates a circulating flow of water in the closed-circuit channel pipe 71.

The heat medium / water heat exchanger 73 is a heat exchanger disposed downstream of the boil-off gas reliquefier 60 in a channel pipe 52B through which the heat medium, i.e., nitrogen gas, circulates. The heat medium / water heat exchanger 73 is a heat exchanger that is supplied with the nitrogen gas whose temperature has risen after it is cooled by the cooling-energy recovery heat exchanger 51 and then the cooling energy thereof is used in the BOG reliquefier 60 for BOG reliquefaction, and exchanges heat between the nitrogen gas and the water circulating through the channel pipe 71 so that the nitrogen gas, which is at a lower temperature, absorbs heat from the water and thereby cools it.

Because the LNG possesses a large amount of cooling energy, the nitrogen gas after BOG reliquefaction can cool the water to a sufficiently low temperature to cool the air.

The thus-cooled water is guided to the air-cooling heat exchanger 54A, which is installed downstream of the heat medium/water heat exchanger 73, to cool the air to be introduced into the supercharger 30 and used as the intake air. That is, whereas the air-cooling heat exchanger 54 in the embodiments described above cools the air with the nitrogen gas, the air-cooling heat exchanger 54A in this embodiment cools the air with the cold water cooled by the nitrogen gas.

This configuration allows the cooling energy possessed by the LNG to be transferred to the nitrogen gas and effectively utilized not only to reliquefy the BOG, but also to decrease the temperature of the air taken into the supercharger 30 at the inlet thereof via water, thereby improving the efficiency of the supercharger 30 and the diesel engine generator 10.

### <Seventh Embodiment>

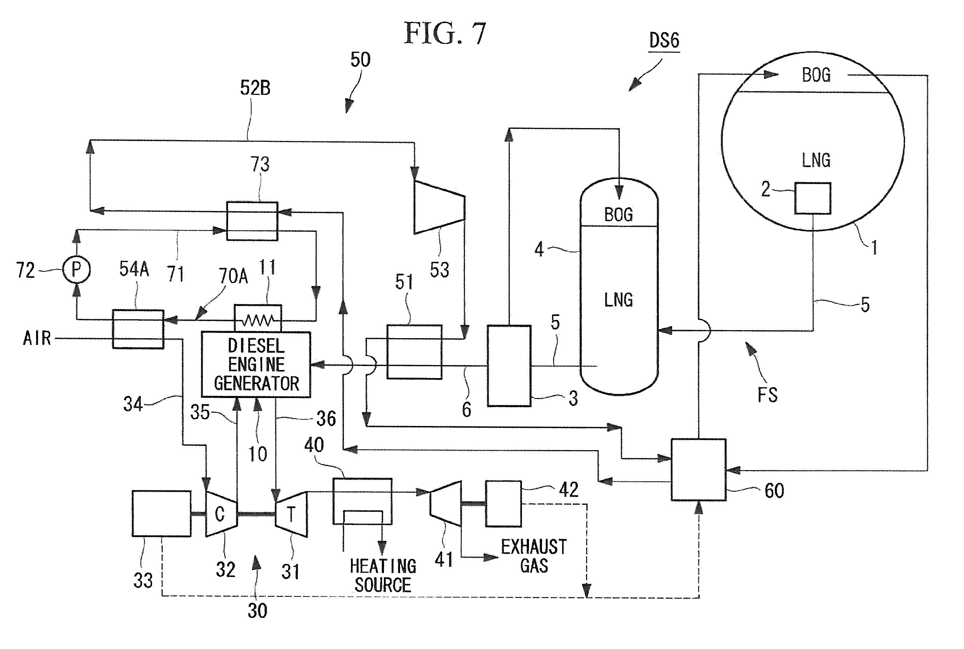

A seventh embodiment of a direct-injection diesel engine system according to the present invention will be described below with reference to Fig. 7. The same parts as in the embodiments described above are indicated by the same reference signs, and the detailed descriptions thereof are omitted herein.

A direct-injection diesel engine system DS6 illustrated in Fig. 7 includes a water circulation circuit 70A that differs from the water circulation circuit 70 in the sixth embodiment described above in that the diesel engine generator 10 is cooled using cold water guided to a cooling-energy utilizing device, i.e., the jacket-cooling-water cooler 11, between the heat medium/water heat exchanger 73 and the air-cooling heat exchanger 54A.

Specifically, in the illustrated jacket-cooling-water cooler 11, the jacket cooling water for the main engine is cooled by heat exchange with the water circulated through the water circulation circuit 71A and cooled by the heat medium/water heat exchanger 73.

### <Eighth Embodiment>

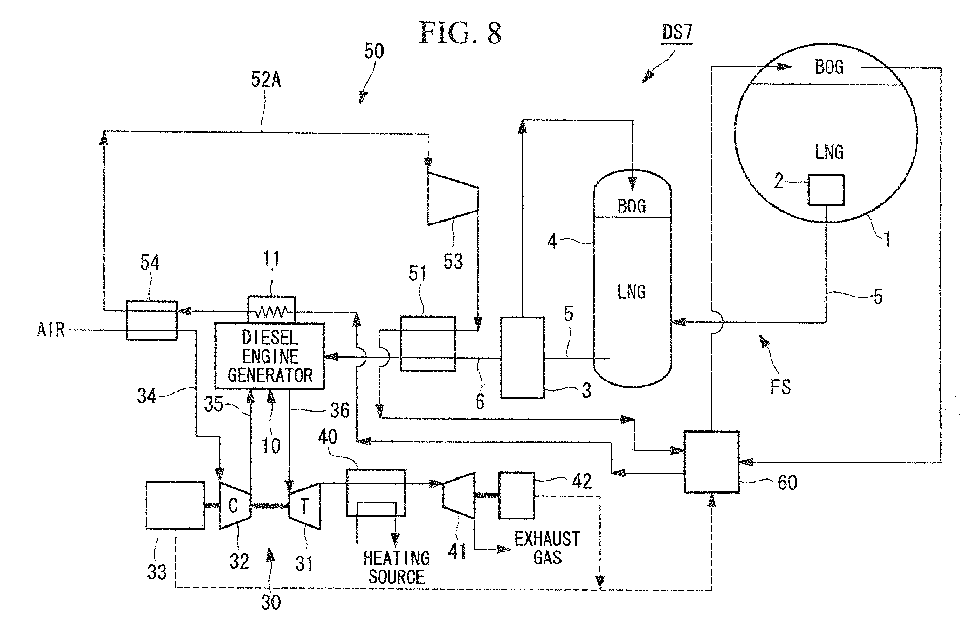

An eighth embodiment of a direct-injection diesel engine system according to the present invention will be described below with reference to Fig. 8. The same parts as in the embodiments described above are indicated by the same reference signs, and the detailed descriptions thereof are omitted herein.

A direct-injection diesel engine system DS7 illustrated in Fig. 8 includes a cooling-energy utilizing device, i.e., the jacket-cooling-water cooler 11, located downstream of the BOG reliquefier 60 to cool the jacket cooling water with the cooling energy of the nitrogen gas. Specifically, in addition to the fifth embodiment described above, the jacket-cooling-water cooler 11 is installed upstream of the air-cooling heat exchanger 54 to cool the jacket cooling water with the nitrogen gas after BOG reliquefaction.

In this embodiment, when the heat medium circulated through the channel pipe 52A, i.e., nitrogen gas, is replaced with air or oxygen, leakage of the heat medium does not decrease the oxygen density and therefore does not adversely affect the engine performance, unlike leakage of nitrogen gas.

### <Ninth Embodiment>

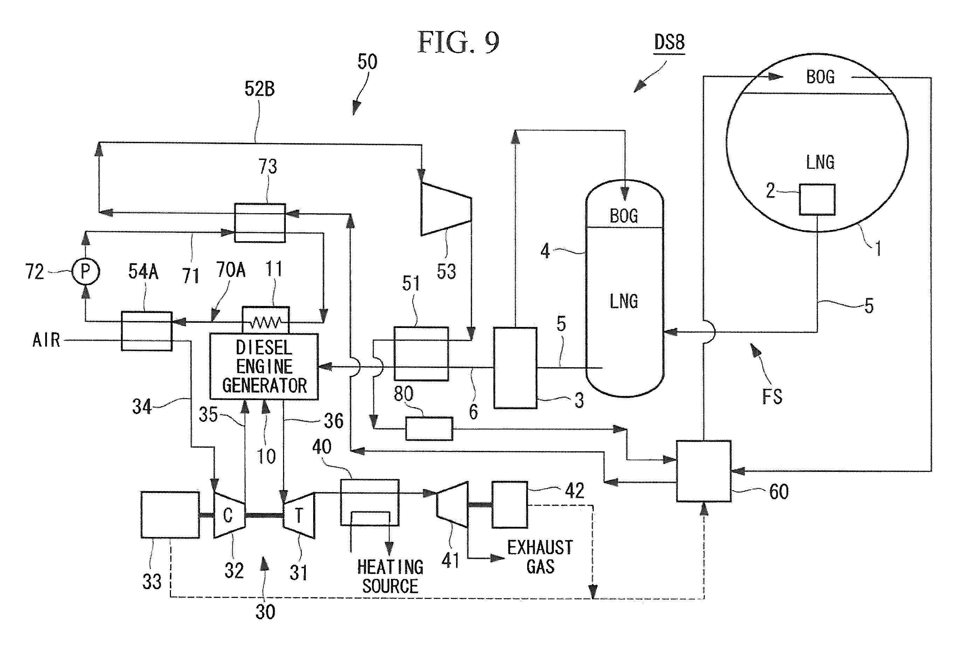

A ninth embodiment of a direct-injection diesel engine system according to the present invention will be described below with reference to Fig. 9. The same parts as in the embodiments described above are indicated by the same reference signs, and the detailed descriptions thereof are omitted herein.

A direct-injection diesel engine system DS8 illustrated in Fig. 9 includes a cold storage unit 80 at a suitable position in the closed circuit through which the heat medium, i.e., nitrogen gas, flows. Although the cold storage unit 80 in the illustrated example is installed between the cooling-energy recovery heat exchanger 51 and the BOG reliquefier 60 to store cooling energy at a stage earlier than (upstream of) BOG reliquefaction, it may be installed at other positions.

The cold storage unit 80 includes a cold storage tank containing a cold storage medium such as a mixture including ethylene glycol and water, and the nitrogen gas can be introduced into the cold storage tank to store any excess cooling energy therein.

If the cold storage unit 80 stores any cooling energy, the stored cooling energy can be released and utilized, depending on the situation.

### <Tenth Embodiment>

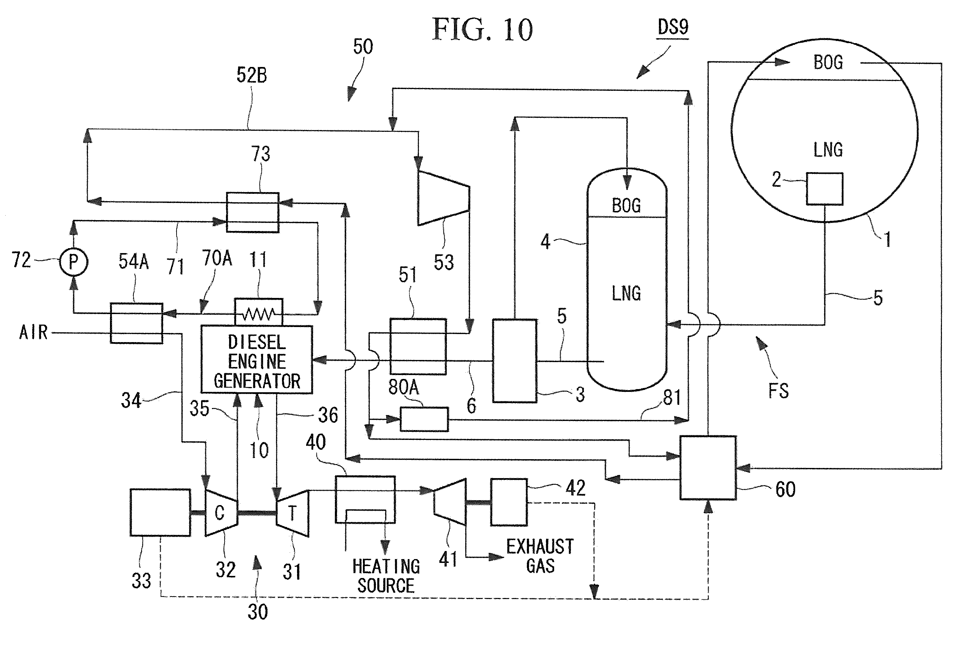

A tenth embodiment of a direct-injection diesel engine system according to the present invention will be described below with reference to Fig. 10. The same parts as in the embodiments described above are indicated by the same reference signs, and the detailed descriptions thereof are omitted herein.

A direct-injection diesel engine system DS9 illustrated in Fig. 10 includes a cold storage unit 80A in a bypass channel 81 branched off from the closed circuit through which the heat medium, i.e., nitrogen gas, flows. The illustrated bypass channel 81 is branched off between the cooling-energy recovery heat exchanger 51 and the BOG reliquefier 60 and is connected between the heat medium/water heat exchanger 73 and the blower 53.

The cold storage unit 80A has substantially the same basic configuration as the cold storage unit 80 in the embodiment described above.

### <Eleventh Embodiment>

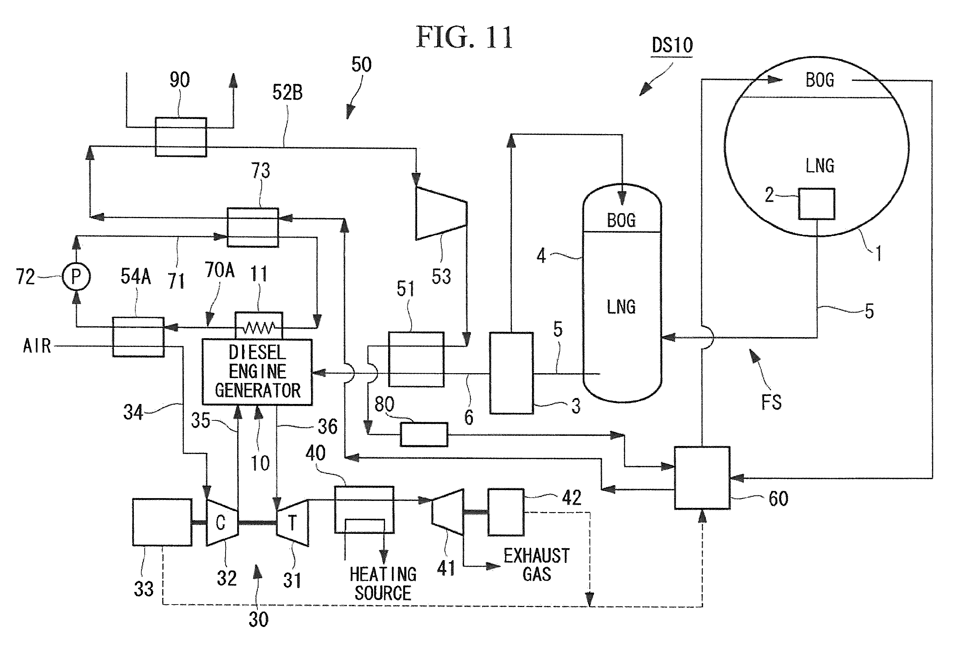

An eleventh embodiment of a direct-injection diesel engine system according to the present invention will be described below with reference to Fig. 11. The same parts as in the embodiments described above are indicated by the same reference signs, and the detailed descriptions thereof are omitted herein.

A direct-injection diesel engine system DS10 illustrated in Fig. 11 includes a heater 90 that consumes excess cooling energy in the closed-circuit channel pipe 52B through which the heat medium, i.e., nitrogen gas, flows.

For example, the heater 90 heats the nitrogen gas with water as a heating source, and forcedly consume excess cooling energy by heat exchange between the nitrogen gas and the water when excess cooling energy is generated in larger amounts than necessary. That is, the heater 90 heats the water with the excess cooling energy possessed by the nitrogen gas and releases the water that has absorbed the cooling energy into the outside of the nitrogen gas circulation system.

Thus, various techniques, such as heating the nitrogen gas using the heater 90, storing cooling energy in the cold storage unit 80, and selecting the cooling-energy utilizing device to utilize cooling energy, can be employed to adjust the cooling energy recovery balance for optimal operation.

In the embodiments described above, to maintain the temperature of the intake air at the inlet of the supercharger 30 within a predetermined range, the heat medium, i.e., nitrogen gas, that circulates through the channel pipe 52 of the cooling-energy recovery unit 50 can be controlled as follows depending on the change in the flow rate of the high-pressure LNG.

To decrease the power output of the main engine, the flow rate of the high-pressure LNG supplied from the booster pump 3 is controlled to a lower level, and at the same time, the circulation flow rate of the nitrogen gas is decreased. On the other hand, to increase the power output of the main engine, the flow rate of the high-pressure LNG supplied from the booster pump 3 is controlled to a higher level, and at the same time, the circulation flow rate of the nitrogen gas is increased. That is, the flow rate of the nitrogen gas, which is on the side where cooling energy is utilized, is controlled so as to maintain a balance depending on the change in the flow rate (change in the amount of cooling energy) of the cooling energy source, i.e., the high-pressure LNG.

A temperature of the intake air at the inlet of the supercharger 30 lower than a predetermined level means that the low-temperature nitrogen gas is oversupplied to the air-cooling heat exchanger 54.

Accordingly, the temperature of the intake air at the inlet can be optimized, for example, by performing control such that a larger amount of cooling energy is consumed by the first cooling energy source, such as the reliquefying heat exchanger 55, to increase the temperature of the nitrogen gas supplied to the air-cooling heat exchanger 54, by providing a bypass channel (not shown) to decrease the flow rate of the nitrogen gas supplied to the air-cooling heat exchanger 54, or by controlling the operation of the blower 53 to decrease the circulation flow rate of the nitrogen gas. If a nitrogen gas channel that bypasses the cooling-energy recovery heat exchanger 51 is provided, the temperature of the nitrogen gas being circulated can be adjusted depending on the bypass flow rate.

A temperature of the intake air at the inlet of the supercharger 30 higher than a predetermined level means that the flow rate of the nitrogen gas supplied to the air-cooling heat exchanger 54 is low or that the gas temperature is high.

Accordingly, the temperature of the intake air at the inlet can be optimized, for example, by performing control such that a smaller amount of cooling energy is consumed by the first cooling energy source, such as the reliquefying heat exchanger 55, to decrease the temperature of the nitrogen gas supplied to the air-cooling heat exchanger 54, by reducing the flow rate of the nitrogen gas flowing into the bypass channel (not shown) to increase the flow rate of the nitrogen gas supplied to the air-cooling heat exchanger 54, or by controlling the operation of the blower 53 to increase the circulation flow rate of the nitrogen gas.

Although the direct-injection diesel engine systems DS according to the embodiments described above are applied to the diesel engine generator 10, they may instead be applied, for example, to main engines for propulsion of LNG carriers equipped with LNG tanks that store the load, i.e., LNG, at extremely low temperatures or to power generation equipment for onboard power supply.

Thus, the embodiments described above provide a significant advantageous effect of improving the operating efficiency of a direct-injection diesel engine system that operates using a low-temperature liquid fuel, such as liquefied natural gas, as a fuel by effectively utilizing the cooling energy possessed by a high-pressure low-temperature liquid fuel.

In particular, the embodiments described above, in which the low-temperature liquid fuel, such as LNG, cools air at least via a heat medium such as nitrogen gas, provide a higher cooling energy availability (exergy) than systems in which air is cooled by an extremely large temperature difference, such as that between LNG and water.

Because the embodiments described above do not directly exchange heat between the low-temperature liquid fuel, such as LNG, and water, that is, do not use a heat exchanger that recovers cooling energy with water directly from LNG, they can prevent water from being frozen by the extremely large temperature difference therebetween.

It should be appreciated that the embodiments described above may optionally be combined with other embodiments or be practiced with configurations that are not illustrated or described.

The present invention is not limited to the embodiments described above; modifications are possible without departing from the scope thereof.

### {Reference Signs List}

- 1: LNG tank
- 3: booster pump
- 4: suction drum
- 5: LNG pipe
- 6: high-pressure LNG pipe
- 10: diesel engine generator
- 11: jacket-cooling-water cooler
- 30: supercharger
- 31: turbine
- 32: compressor
- 33: auxiliary generator
- 40: reheater
- 41: exhaust gas turbine
- 42: turbine-driven generator
- 50: cooling-energy recovery unit
- 51: cooling-energy recovery heat exchanger
- 52, 52A, 52B: channel pipe
- 53: blower
- 54, 54A: air-cooling heat exchanger
- 55: reliquefying heat exchanger
- 60: BOG reliquefier
- 70, 70A: water circulation circuit
- 73: heat medium / water heat exchanger
- 80, 80A: cold storage unit
- 90: heater
- DS, DS1 to DS10: direct-injection diesel engine system
- FS: liquefied natural gas fuel supply system (low-temperature liquid fuel supply system)

## Claims

1. A direct-injection diesel engine system that uses a high-pressure gas generated by vaporizing a low-temperature liquid fuel as an engine fuel and that combusts the engine fuel with intake air pressurized by a supercharger, the direct-injection diesel engine system comprising:
a booster pump installed in a low-temperature liquid fuel supply system that supplies and injects the high-pressure gas into a cylinder of the direct-injection diesel engine, the booster pump pressurizing a low-pressure low-temperature liquid fuel supplied from a low-temperature liquid fuel tank;
a cooling-energy recovery heat exchanger that conducts heat exchange between a heat medium that circulates through a closed circuit and the high-pressure low-temperature liquid fuel pressurized by the booster pump in order to cool the heat medium; and
an air-cooling heat exchanger that conducts heat exchange with the heat medium downstream of the cooling-energy recovery heat exchanger to cool air which is to be supplied to the supercharger and which is used as intake air, and/or to cool intake air compressed by the supercharger.

2. A direct-injection diesel engine system that uses a high-pressure gas generated by vaporizing a low-temperature liquid fuel as an engine fuel and that combusts the engine fuel with intake air pressurized by a supercharger, the direct-injection diesel engine comprising:
a booster pump installed in a low-temperature liquid fuel supply system that supplies and injects the high-pressure gas into a cylinder of the direct-injection diesel engine, the booster pump pressurizing a low-pressure low-temperature liquid fuel supplied from a low-temperature liquid fuel tank;
a cooling-energy recovery heat exchanger that conducts heat exchange between a heat medium that circulates through a closed circuit and the high-pressure low-temperature liquid fuel pressurized by the booster pump to cool the heat medium;
a boil-off gas reliquefier located downstream of the cooling-energy recovery heat exchanger, for reliquifying boil-off gas of the low-temperature liquid fuel using the heat medium as a cooling energy source; and
an air-cooling heat exchanger that conducts heat exchange with the heat medium downstream of the boil-off gas reliquefier to cool air which is to be supplied to the supercharger and which is used as intake air, and/or to cool intake air compressed by the supercharger.

3. A direct-injection diesel engine system that uses a high-pressure gas generated by vaporizing a low-temperature liquid fuel as an engine fuel and that combusts the engine fuel with intake air pressurized by a supercharger, the direct-injection diesel engine comprising:
a booster pump installed in a low-temperature liquid fuel supply system that supplies and injects the high-pressure gas into a cylinder of the direct-injection diesel engine, the booster pump pressurizing a low-pressure low-temperature liquid fuel supplied from a low-temperature liquid fuel tank;
a cooling-energy recovery heat exchanger that conducts heat exchange between a heat medium that circulates through a closed circuit and the high-pressure low-temperature liquid fuel pressurized by the booster pump to cool the heat medium;
a boil-off gas reliquefier located downstream of the cooling-energy recovery heat exchanger, for reliquifying boil-off gas of the low-temperature liquid fuel using the heat medium as a cooling energy source;
a heat medium/water heat exchanger located downstream of the boil-off gas reliquifier, for conducting heat exchange between the heat medium and water that circulates through a closed circuit to cool the water; and
an air-cooling heat exchanger that conducts heat exchange with the water cooled by the heat medium/water heat exchanger to cool air which is to be supplied to the supercharger and which is used as intake air, and/or to cool intake air compressed by the supercharger.

4. The direct-injection diesel engine system according to Claim 1 or 2, further comprising one or more cooling-energy utilizing devices provided upstream of the air-cooling heat exchanger and which use the heat medium cooled by the cooling-energy recovery heat exchanger as a cooling energy source.

5. The direct-injection diesel engine system according to Claim 3, further comprising one or more cooling-energy utilizing devices provided upstream of the air-cooling heat exchanger and which use the water cooled by the heat medium/water heat exchanger as a cooling energy source.

6. The direct-injection diesel engine system according to any one of Claims 1 to 5, further comprising a cold storage unit in the closed circuit through which the heat medium flows or a bypass channel branched off from the closed circuit.

7. The direct-injection diesel engine system according to any one of Claims 1 to 6, further comprising a heater that consumes excess cooling energy in the closed circuit through which the heat medium flows.

8. The direct-injection diesel engine system according to any one of Claims 1 to 7, further comprising a superchargerdriven generator that is driven by power output from the supercharger.

9. The direct-injection diesel engine system according to any one of Claims 1 to 8, further comprising a reheater that heats exhaust gas discharged from the supercharger, an exhaust gas turbine that is driven by the exhaust gas whose temperature has risen by passing through the reheater, and a turbine-driven generator that is driven by the exhaust gas turbine.

## Amended claims

### Amended claims under Art. 19.1 PCT

**.** laim 2} A direct-injection diesel engine system that uses a high-pressure gas generated by vaporizing a low-temperature liquid fuel as an engine fuel and that combusts the engine fuel with intake air pressurized by a supercharger, the direct-injection diesel engine comprising:
a booster pump installed in a low-temperature liquid fuel supply system that supplies and injects the high-pressure gas into a cylinder of the direct-injection diesel engine system, the booster pump pressurizing a low-pressure low-temperature liquid fuel supplied from a low-temperature liquid fuel tank;
a cooling-energy recovery heat exchanger that conducts heat exchange between a heat medium that circulates through a closed circuit and the high-pressure low-temperature liquid fuel pressurized by the booster pump to cool the heat medium;
a boil-off gas reliquefier located downstream of the cooling-energy recovery heat exchanger, for reliquifying boil-off gas of the low-temperature liquid fuel using the heat medium as a cooling energy source; and
an air-cooling heat exchanger that conducts heat exchange with the heat medium downstream of the boil-off gas reliquefier to cool air which is to be supplied to the supercharger and which is used as intake air, and/or to cool intake air compressed by the supercharger.

**.** laim 3} A direct-injection diesel engine system that uses a high-pressure gas generated by vaporizing a low-temperature liquid fuel as an engine fuel and that combusts the engine fuel with intake air pressurized by a supercharger, the direct-injection diesel engine comprising:
a booster pump installed in a low-temperature liquid fuel supply system that supplies and injects the high-pressure gas into a cylinder of the direct-injection diesel engine system, the booster pump pressurizing a low-pressure low-temperature liquid fuel supplied from a low-temperature liquid fuel tank;
a cooling-energy recovery heat exchanger that conducts heat exchange between a heat medium that circulates through a closed circuit and the high-pressure low-temperature liquid fuel pressurized by the booster pump to cool the heat medium;
a boil-off gas reliquefier located downstream of the cooling-energy recovery heat exchanger, for reliquifying boil-off gas of the low-temperature liquid fuel using the heat medium as a cooling energy source;
a heat medium/water heat exchanger located downstream of the boil-off gas reliquifier, for conducting heat exchange between the heat medium and water that circulates through a closed circuit to cool the water; and
an air-cooling heat exchanger that conducts heat exchange with the water cooled by the heat medium/water heat exchanger to cool air which is to be supplied to the supercharger and which is used as intake air, and/or to cool intake air compressed by the supercharger.

**.** laim 4} The direct-injection diesel engine system according to Claim 1, further comprising one or more cooling-energy utilizing devices provided upstream of the air-cooling heat exchanger and which use the heat medium cooled by the cooling-energy recovery heat exchanger as a cooling energy source.

**.** laim 5} The direct-injection diesel engine system according to Claim 3, further comprising one or more cooling-energy utilizing devices provided upstream of the air-cooling heat exchanger and which use the water cooled by the heat medium/water heat exchanger as a cooling energy source.

**.** laim 6} The direct-injection diesel engine system according to any one of Claims 2 to 5, further comprising a cold storage unit in the closed circuit through which the heat medium flows or a bypass channel branched off from the closed circuit.

**.** laim 7} The direct-injection diesel engine system according to any one of Claims 2 to 6, further comprising a heater that consumes excess cooling energy in the closed circuit through which the heat medium flows.

**.** laim 8} The direct-injection diesel engine system according to any one of Claims 2 to 7, further comprising a supercharger-driven generator that is driven by power output from the supercharger.

**.** laim 9} The direct-injection diesel engine system according to any one of Claims 2 to 8, further comprising a reheater that heats exhaust gas discharged from the supercharger, an exhaust gas turbine that is driven by the exhaust gas whose temperature has risen by passing through the reheater, and a turbine-driven generator that is driven by the exhaust gas turbine.
